# EUROPÄISCHE PATENTANMELDUNG

(11) **EP 3 595 050 A1**
(43) Veröffentlichungstag der Anmeldung: **15.01.2020**
(21) Anmeldenummer: 19178989.0
(22) Anmeldetag: 07.06.2019
(51) Int. Cl.: H01M 4/04, H01M 4/13, H01M 4/133, H01M 4/88, H01M 10/052, H01M 10/42, H01M 10/54

(54) **HERSTELLUNG VON ELEKTRODEN MIT ELEKTROLYTLÖSUNGSMITTEL UND/ODER IONISCHEN FLÜSSIGKEITEN GEFÜLLTEN ELEKTRODENMATERIALIEN**

(30) Priorität: 20.06.2018 DE 102018209964
(71) Anmelder: Robert Bosch GmbH, 70442 Stuttgart (DE)
(72) Erfinder: Bauer, Harald, 71139 Ehningen (DE); Trossmann, Torsten, 71636 Ludwigsburg (DE); Hackenberg, Juergen, 74343 Sachsenheim (DE)

(57) **Zusammenfassung**

Die vorliegende Erfindung betrifft ein Verfahren zur Herstellung einer Elektrode (10) für eine elektrochemische Zelle, insbesondere für eine Batteriezelle und/oder Brennstoffzelle und/oder Elektrolysezelle. Um auf einfache und insbesondere vergleichsweise zeitgünstige und kostengünstige Weise Elektroden (10) für elektrochemische Zellen, wie Batteriezellen und/oder Brennstoffzellen und/oder Elektrolysezellen, herzustellen, welche eine verbesserte lonenleitfähigkeit und/oder ionische Anbindung und/oder Stromdichteverteilung aufweisen und damit insbesondere die Leistungsfähigkeit einer damit ausgestatteten Zelle erhöhen kann, werden in dem Verfahren mindestens ein Elektrodenmaterial (1) und mindestens ein wasserlösendes, organisches Elektrolytlösungsmittel und/oder mindestens eine wasserlösende, ionische Flüssigkeit (100) gemischt und wird dann das das mindestens eine Elektrodenmaterial (1*) wieder von dem mindestens einen organischen Elektrolytlösungsmittel und/oder der mindestens einen ionischen Flüssigkeit (100*) abgetrennt. Aus dem mindestens einen abgetrennten Elektrodenmaterial (1*) wird dann eine Elektrode (10) ausgebildet. Darüber hinaus betrifft die Erfindung eine dadurch hergestellte Elektrode (10) sowie eine damit ausgestattete elektrochemische Zelle.

## Beschreibung

Die vorliegende Erfindung betrifft ein Verfahren zur Herstellung einer Elektrode für eine elektrochemische Zelle, insbesondere für eine Batteriezelle und/oder Brennstoffzelle und/oder Elektrolysezelle, eine dadurch hergestellte Elektrode sowie eine damit ausgestattete elektrochemische Zelle.

### Stand der Technik

Elektrochemische Zellen, wie Lithium-Ionen-Zellen und Lithium-Metall-Zellen für Sekundärbatterien, Brennstoffzellen und Elektrolysezellen, weisen eine negative Elektrode, eine positive Elektrode und mindestens einen Elektrolyten auf.

Batteriezellen können unter anderem Lithium-Zellen mit einer Lithium-basierten negativen Elektrode, welche im Fall von Batteriezellen auch als Anode bezeichnet wird, sein. Um unerwünschte Reaktionen mit Lithium zu vermeiden, werden Lithium-Zellen möglichst wasserfrei hergestellt.

In der Regel werden hierzu nach Möglichkeit bereits bei der Herstellung der Elektroden möglichst wasserfreie, aufwändig getrocknete Ausgangsmaterialien eingesetzt und aufwändig wasserfrei gehalten und/oder die fertig hergestellten Elektroden vor der Zellfertigung aufwändig, insbesondere zeit- und kostenaufwändig, intensiv vakuumgetrocknet. Dennoch kann es vorkommen, dass bei der Herstellung - gegebenenfalls sogar größere - Wassermengen unabsichtlich in die Zelle gelangen. Diese können sich beim Formieren, das heißt beim erstmaligen elektrischen Konditionieren durch Laden und/oder Entladen der Zelle, und/oder Betrieb der Zelle zersetzen und/oder durch eine angelegte Spannung zur Anode transportiert werden und dort zu einer ungünstigen SEI-Bildung (SEI, Englisch: Solid Elektrolyte Interphase) führen und/oder unerwünschte Nebenprodukte, wie Lithiumhydroxid, bilden.

Die Druckschrift US 2014/0363746 A1 beschreibt eine Lithium-Zelle.

Die Druckschriften US 2011/0239446 A1, EP 2 357 046 A2, WO 2005/008807 A2, WO 2005/049700 A1 und DE 10 2004 012 476 A1 beschreiben Verfahren zur Herstellung von Elektroden.

### Offenbarung der Erfindung

Gegenstand der vorliegenden Erfindung ist ein Verfahren zur Herstellung einer Elektrode, insbesondere einer positiven Elektrode und/oder einer negativen Elektrode, für eine elektrochemische Zelle, insbesondere für eine Batteriezelle und/oder Brennstoffzelle und/oder Elektrolysezelle.

In dem Verfahren werden, beispielsweise in einem Verfahrensschritt a), insbesondere mindestens ein, beispielsweise partikuläres, Elektrodenmaterial und mindestens ein, insbesondere wasserlösendes, organisches Elektrolytlösungsmittel und/oder mindestens eine, insbesondere wasserlösende, ionische Flüssigkeit gemischt.

Insbesondere wird (dann), insbesondere nach einer bestimmten Mischzeit und/oder Verweilzeit, beispielsweise in einem Verfahrensschritt b), das mindestens eine Elektrodenmaterial wieder von dem mindestens einen organischen Elektrolytlösungsmittel und/oder der mindestens einen ionischen Flüssigkeit abgetrennt.

Aus dem mindestens einen abgetrennten Elektrodenmaterial wird insbesondere (dann), beispielsweise in einem Verfahrensschritt c), eine Elektrode ausgebildet. Beim Mischen des mindestens einen Elektrodenmaterials und des mindestens einen organischen Elektrolytlösungsmittel und/oder der mindestens einen ionische Flüssigkeit kann vorteilhafterweise das mindestens eine organische Elektrolytlösungsmittel und/oder die mindestens eine ionische Flüssigkeit Wasser aus dem mindestens einen Elektrodenmaterial lösen, insbesondere heraus lösen. Über Diffusion kann sich dabei beispielsweise ein Gleichgewicht zwischen an dem mindestens einen Elektrodematerial adsorbiertem Wasser und in dem mindestens einen organischen Elektrolytlösungsmittel und/oder der mindestens einen ionischen Flüssigkeit gelösten Wasser einstellen, wobei sich der Wassergehalt des mindestens einen Elektrodenmaterials verringert und der Wassergehalt des mindestens einen organischen Elektrolytlösungsmittels und/oder der mindestens einen ionischen Flüssigkeit erhöhen kann. Beim Abtrennen des mindestens einen Elektrodenmaterials von dem mindestens einen organischen Elektrolytlösungsmittel und/oder der mindestens einen ionischen Flüssigkeit kann so sowohl das mindestens eine organische Elektrolytlösungsmittel und/oder die mindestens eine ionische Flüssigkeit als auch das darin gelöste Wasser, beispielsweise anteilig, entfernt werden. So kann Wasser aus dem mindestens einen Elektrodenmaterial entfernt und/oder dessen Wassergehalt auf einfache Weise gesenkt werden. So kann das mindestens eine Elektrodenmaterial vorteilhafterweise auf einfache und vergleichsweise zeitgünstige und kostengünstige Weise getrocknet werden.

Dies kann besonders vorteilhaft bei, beispielsweise pulverförmigen, Elektrodenmaterialien mit einer, insbesondere nanoskaligen, Struktur und/oder Oberflächenstruktur beziehungsweise Oberflächenrauhigkeit und/oder mit einer inneren Struktur, beispielsweise mit einer Schichtstruktur und/oder mit einer inneren Porosität, und/oder mit einer Partikel-Agglomerate aufweisenden Morphologie, zum Beispiel bei, insbesondere partikulären, Elektrodenaktivmaterialien, wie Elektrodenaktivmaterialien von positiven Elektroden, zum Beispiel Übergangmetalloxiden, und/oder Elektrodenaktivmaterialien von negativen Elektroden, zum Beispiel Graphit, und/oder bei, insbesondere partikulären, Elektrodenzusatzstoffen, beispielsweise, insbesondere elektrischen, Leitmitteln, zum Beispiel kohlenstoffbasierten Leitmitteln, wie Graphit und/oder amorphem Kohlenstoff, zum Beispiel (Leit-)Ruß, sein.

Derartige Elektrodenmaterialien können in der Praxis, insbesondere aufgrund der Benetzungseigenschaften von Wasser auf deren Oberflächen, insbesondere sowohl vor der Prozessierung als auch nach der Elektrodenherstellung, in der Regel nicht vollständig getrocknet werden, da diese selbst unter aufwendigen Trockenraumbedingungen an ihren äußeren und gegebenenfalls auch inneren Oberflächen mehrere Atomlagen Wasser adsorbieren und/oder absorbieren können, welches thermisch, insbesondere nach der Elektrodenherstellung, kaum noch entfernt werden kann. Beispielsweise kann bei Polymer- und/oder Polymerelektrolyt-basierten Elektroden, insbesondere aufgrund der vergleichsweise geringen thermischen Stabilität von Polymeren und Polymerelektrolyten, und weiterhin beispielsweise bei durch trockene Herstellungsprozesse hergestellten Polymer- und/oder Polymerelektrolyt-basierten Elektroden, insbesondere aufgrund von deren Kompaktheit, an äußeren und gegebenenfalls auch inneren Oberflächen adsorbiertes und/oder absorbiertes Wasser, insbesondere nach der Elektrodenherstellung, thermisch nicht wieder entfernt werden.

Durch eine Senkung des Wassergehalts kann vorteilhafterweise eine gleichmäßigere Stromdichteverteilung, beispielsweise beim ersten Laden beziehungsweise Formieren, sowie ein schnelleres Formieren erzielt werden, da lokal der Anteil an Oberflächen, welche fälschlicherweise mit Wasser belegt sind, sowie unerwünschte Nebenreaktionen deutlich reduziert werden können.

Zudem können in dem mindestens einen abgetrennten Elektrodenmaterial, insbesondere an der Oberfläche und/oder in Poren des mindestens einen abgetrennten Elektrodenmaterials Rückstände des organischen Elektrolytlösungsmittels und/oder der mindestens einen ionischen Flüssigkeit verbleiben, welche als interpartikuläre und/oder intrapartikuläre Füllstoffe, insbesondere als intrapartikuläre Füllstoffe von Poren, beispielsweise Nanoporen, zum Beispiel in Elektrodenaktivmaterialien von Batteriezellen, wie Lithium-Zellen, dienen und die ionische Leitfähigkeit und die ionische Anbindung an der Oberfläche und/oder insbesondere auch in Poren drastisch verbessern kann. Dies kann sowohl für Flüssigelektrolyt-Zellen als auch insbesondere für Festelektrolyt-Zellen, beispielsweise Polymerelektrolyt-Zellen, vorteilhaft sein. Besonders vorteilhaft können sich beispielsweise ionische Flüssigkeiten auf die lonenleitfähigkeit, beispielsweise Lithiumionenleitfähigkeit, von Festelektrolyt-Zellen, beispielsweise Polymerelektrolyt-Zellen, auswirken, beispielsweise in dem die lonenleitfähigkeit, beispielsweise Lithiumionenleitfähigkeit, von Polymerelektrolyten durch die ionische Flüssigkeit deutlich erhöht werden kann (siehe zum Beispiel Anji Reddy Polu, Hee-Woo Rhee, lonic liquid doped PEObased solid polymer electrolytes for lithium-ion polymer batteries, International Journal of Hydrogen Energy, 42(2017), 7212-7219 und Diddo Diddens, Andreas Heuer, Lithium Ion Transport Mechanism in Ternary Polymer Electrolyte-lonic Liquid Mixtures: A Molecular Dynamics Simulation Study, ACS Macro Lett., 2, 4, 322-326.)

Bei Polymerelektrolyt-Zellen kann dies von besonderem Vorteil sein, da hierbei der Polymerelektrolyt, beispielsweise auch in einem erwärmten Zustand, kaum beziehungsweise so gut wie nicht in eine, beispielsweise nanoskalige, Porosität eindringen kann. Durch die Behandlung mit dem mindestens einen organischen Elektrolytlösungsmittel und/oder mit der mindestens einen ionischen Flüssigkeit können vorteilhafterweise auch bei Polymerelektrolyt-Zellen, beispielsweise nanoskalige, Porositäten mit dem mindestens einen organischen Elektrolytlösungsmittel und/oder der mindestens einen ionischen Flüssigkeit - und beispielsweise zusätzlich mit mindestens einem Leitsalz und/oder Additiv - gefüllt und auf diese Weise ansonsten - gegebenenfalls sogar luftgefüllte - Hohlräume mit oberflächengebundenen Wassermoleküllagen in der Elektrode vermieden beziehungsweise verhindert werden.

Darüber hinaus können organische Elektrolytlösungsmittel und ionische Flüssigkeiten vergleichsweise einfach, beispielsweise durch Destillation und/oder Molsiebe, wieder getrocknet und auf diese Weise für eine erneute Verwendung in dem Verfahren rezykliert werden.

Insgesamt können so durch das Verfahren auf einfache - und beispielsweise vergleichsweise zeitgünstige und kostengünstige - Weise Elektroden für elektrochemische Zellen, wie Batteriezellen und/oder Brennstoffzellen und/oder Elektrolysezellen, hergestellt werden, welche eine verbesserte lonenleitfähigkeit und/oder ionische Anbindung und/oder Stromdichteverteilung aufweisen und insbesondere die Leistungsfähigkeit einer damit ausgestatteten Zelle erhöhen können.

Das mindestens eine Elektrodenmaterial kann insbesondere mindestens ein, beispielsweise partikuläres, Elektrodenaktivmaterial, beispielsweise mindestens ein, beispielsweise partikuläres, Elektrodenaktivmaterial für eine positive Elektrode oder mindestens ein, beispielsweise partikuläres, Elektrodenaktivmaterial für eine negative Elektrode, und/oder mindestens einen, beispielsweise partikulären Elektrodenzusatzstoff, zum Beispiel mindestens ein, beispielsweise elektrisches, Leitmittel, zum Beispiel (Leit-)Ruß, umfassen oder sein.

Im Rahmen einer Ausführungsform umfasst oder ist das mindestens eine organische Elektrolytlösungsmittel mindestens ein Lacton, zum Beispiel Gammabutyrolacton (GBL), und/oder mindestens ein organisches Carbonat, beispielsweise mindestens ein acyclisches und/oder cyclisches, organisches Carbonat, zum Beispiel Ethylencarbonat (EC) und/oder Ethylmethylcarbonat (EMC) und/oder Dimethylcarbonat (DMC) und/oder Diethylcarbonat (DEC) und/oder Vinylencarbonat (VC), und/oder mindestens ein Oligo- und/oder Poly-Alkylenoxid, beispielsweise Oligo- und/oder Poly-Ethylenoxid, gegebenenfalls in Form einer Mischung aus mehreren Oligo- und/oder Poly-Alkylenoxiden mit unterschiedlich vielen Wiederholungseinheiten (Batch), beispielsweise mit ≤ 50 Wiederholungseinheiten, beispielsweise mit ≤ 30 Wiederholungseinheiten, zum Beispiel mindestens ein Oligo- und/oder Poly-Ethylenoxid mit ≤ 30 Wiederholungseinheiten, beispielsweise mit etwa 20 Wiederholungseinheiten, zum Beispiel PEO₂₀, und/oder mit etwa 10 Wiederholungseinheiten, zum Beispiel PEG400. Diese organischen Elektrolytlösungsmittel können besonders vorteilhaft sein.

Im Rahmen einer weiteren Ausführungsform umfasst oder ist die mindestens eine ionische Flüssigkeit Imid-Anionen, beispielsweise Sulfonylimid-Anionen, zum Beispiel Bis(trifluormethansulfonyl)imid-Anionen (TFSI⁻) und/oder Bis(fluorsulfonyl)imid-Anionen (FSI⁻) und/oder Bis(perfluorethansulfonyl)imid-Anionen (PFSI⁻), und/oder Tosylat-Anionen und/oder Triflat-Anionen und/oder Pyrrolidinium-Kationen, zum Beispiel N-methyl-N-propylpyrrolidinium-Kationen (PYR13). Derartige ionische Flüssigkeiten können besonders vorteilhaft sein.

Insbesondere kann die mindestens eine ionische Flüssigkeit Imid-Anionen, beispielsweise Sulfonylimid-Anionen, zum Beispiel Bis(trifluormethansulfonyl)imid-Anionen (TFSI⁻) und/oder Bis(fluorsulfonyl)imid-Anionen (FSI⁻) und/oder Bis(perfluorethansulfonyl)imid-Anionen (PFSI⁻), und Pyrrolidinium-Kationen, zum Beispiel N-methyl-N-propylpyrrolidinium-Kationen (PYR13) umfassen oder daraus ausgebildet sein.

Zum Beispiel kann die mindestens eine ionische Flüssigkeit N-methyl-N-propylpyrrolidinium-Bis(trifluormethansulfonyl)imid (PYR13TFSI) und/oder N-methyl-N-propylpyrrolidinium-Bis(fluorsulfonyl)imid (PYR13FSI) und/oder N-methyl-N-propylpyrrolidinium-Bis(perfluorethansulfonyl)imid (PYR13PFSI), insbesondere N-methyl-N-propylpyrrolidinium-Bis(trifluormethansulfonyl)imid (PYR13TFSI) und/oder N-methyl-N-propylpyrrolidinium-Bis(fluorsulfonyl)imid (PYR13FSI), umfassen oder daraus ausgebildet sein.

Das das mindestens eine organische Elektrolytlösungsmittel und/oder die mindestens eine ionische Flüssigkeit können insbesondere unter Prozessbedingungen, beispielsweise Mischbedingungen, flüssig und/oder verflüssigend, zum Beispiel bei Raumtemperatur und/oder bei einer durch das Mischen bedingten erhöhten Temperatur und/oder bei einer ansonsten, beispielsweise durch Wärmezufuhr, erhöhten Temperatur flüssig und/oder verflüssigend, sein.

Im Rahmen einer weiteren Ausführungsform wird, beispielsweise in Verfahrensschritt a), mit dem mindestens einen Elektrodenmaterial und mit dem mindestens einen organischen Elektrolytlösungsmittel und/oder mit der mindestens einen ionischen Flüssigkeit zusätzlich mindestens ein Leitsalz, beispielsweise mindestens ein Lithium-Leitsalz, und/oder mindestens ein, beispielsweise flüssiges, Elektrodenadditiv, gemischt und/oder enthält das mindestens eine organische Elektrolytlösungsmittel und/oder die mindestens eine ionische Flüssigkeit mindestens ein Leitsalz, beispielsweise Lithium-Leitsalz, zum Beispiel Lithium-Bis(trifluormethansulfonyl)imid (LiTFSI), und/oder mindestens ein, beispielsweise flüssiges, Elektrodenadditiv, insbesondere in darin gelöster Form. So kann die ionische Leitfähigkeit und die ionische Anbindung an der Oberfläche und/oder insbesondere auch in Poren des mindestens einen Elektrodenmaterials, welche auf an Oberflächen und/oder in Poren des mindestens einen abgetrennten Elektrodenmaterials verbleibenden Rückständen, welche als interpartikuläre und/oder intrapartikuläre Füllstoffe dienen, beruht weiter verbessern.

Das mindestens eine Leitsalz, insbesondere Lithium-Leitsalz, kann zum Beispiel Lithium-Bis(trifluormethansulfonyl)imid (LiTFSI) und/oder Lithium-Bis(fluorsulfonyl)imid (LiFSI) und/oder Lithium-Bis(perfluorethansulfonyl)imid (LiPFSI) und/oder Lithium-Trifluormethansulfonat (Lithium-Triflat) und/oder Lithium-Hexafluorophosphat (LiPF₆) und/oder Lithium-Perchlorat (LiClO₄) und/oder Lithium-Tetrafluoroborat (LiBF₄) und/oder Lithium-Bisoxalatoborat (LiBOB) und/oder Lithium-Bisfluorooxalatoborat, insbesondere Lithium-Bis(trifluormethansulfonyl)imid (LiTFSI), umfassen oder sein.

Zum Beispiel kann das mindestens eine organische Elektrolytlösungsmittel in Form mindestens eines Flüssigelektrolyten eingesetzt werden, welcher das mindestens eine organische Elektrolytlösungsmittel und mindestens ein Leitsalz, beispielsweise mindestens ein Lithium-Leitsalz, zum Beispiel Lithium-Bis(trifluormethansulfonyl)imid (LiTFSI), und/oder mindestens ein, beispielsweise flüssiges, Elektrodenadditiv, insbesondere in darin gelöster Form, enthält.

Grundsätzlich kann, beispielsweise in Verfahrensschritt a), mit dem mindestens einen Elektrodenmaterial sowohl lediglich das mindestens eine organische Elektrolytlösungsmittel, beispielsweise Ethylencarbonat und/oder Ethylmethylcarbonat und/oder Dimethylcarbonat und/oder Diethylcarbonat und/oder Vinylencarbonat und/oder mindestens ein Oligo- und/oder Poly-Alkylenoxid, insbesondere Oligo- und/oder Poly-Ethylenoxid, mit ≤ 50 Wiederholungseinheiten oder eine Mischung daraus, als auch lediglich die mindestens eine ionische Flüssigkeit, beispielsweise N-methyl-N-propylpyrrolidinium-Bis(trifluormethansulfonyl)imid (PYR13TFSI) und/oder N-methyl-N-propylpyrrolidinium-Bis(fluorsulfonyl)imid (PYR13FSI), gemischt werden.

Insbesondere kann jedoch, beispielsweise in Verfahrensschritt a), mit dem mindestens einen Elektrodenmaterial mindestens zwei oder drei oder vier oder mehr Komponenten, welche ausgewählt sind aus der Gruppe der, insbesondere wasserlösenden, organischen Elektrolytlösungsmittel und/oder aus der Gruppe der, insbesondere wasserlösenden, ionischen Flüssigkeiten, und gegebenenfalls aus der Gruppe der Leitsalze, beispielsweise Lithium-Leitsalze, und/oder gegebenenfalls aus der Gruppe der, beispielsweise flüssigen, Elektrodenadditive, und/oder eine binäre oder ternäre oder quaternäre oder höher komponentige Mischung, welche mindestens zwei oder drei oder vier oder mehr Komponenten ausgewählt aus der Gruppe der, insbesondere wasserlösenden, organischen Elektrolytlösungsmittel und/oder aus der Gruppe der, insbesondere wasserlösenden, ionischen Flüssigkeiten und gegebenenfalls aus der Gruppe der Leitsalze, beispielsweise Lithium-Leitsalze, und/oder gegebenenfalls aus der Gruppe der, beispielsweise flüssigen, Elektrodenadditive, umfasst, gemischt werden. Dabei kann die Gruppe der organischen Elektrolytlösungsmittel insbesondere die im Zusammenhang mit dem mindestens einen organischen Elektrolytlösungsmittel erläuterten Komponenten und die Gruppe der ionischen Flüssigkeiten insbesondere die im Zusammenhang mit der mindestens einen ionischen Flüssigkeit erläuterten Komponenten und die Gruppe der Leitsalze insbesondere die im Zusammenhang mit dem mindestens einen Leitsalz erläuterten Komponenten und die Gruppe der Elektrodenadditive insbesondere die im Zusammenhang mit dem mindestens einen Elektrodenadditiv erläuterten Komponenten umfassen.

Zum Beispiel können, beispielsweise in Verfahrensschritt a), mit dem mindestens einen Elektrodenmaterial mindestens drei oder vier oder mehr Komponenten und/oder eine ternäre oder quaternäre oder höherkomponentige Mischung aus mindestens drei oder vier oder mehr Komponenten gemischt werden, wobei die Komponenten ausgewählt sind aus der Gruppe der, insbesondere wasserlösenden, organischen Elektrolytlösungsmittel und aus der Gruppe der, insbesondere wasserlösenden, ionischen Flüssigkeiten, und aus der Gruppe der Leitsalze, beispielsweise Lithium-Leitsalze.

Zum Beispiel können, beispielsweise in Verfahrensschritt a), mit dem mindestens einen Elektrodenmaterial mindestens ein Oligo- und/oder Poly-Alkylenoxid, insbesondere mindestens ein Oligo- und/oder Poly-Ethylenoxid, mit ≤ 50 Wiederholungseinheiten, beispielsweise Oligo- und/oder Poly-Ethylenoxid mit etwa 20 Wiederholungseinheiten, zum Beispiel PEO₂₀, und/oder mit etwa 10 Wiederholungseinheiten, zum Beispiel PEG400, und mindestens ein Leitsalz, beispielsweise Lithium-Leitsalz, zum Beispiel Lithium-Bis(trifluormethansulfonyl)imid (LiTFSI), und mindestens eine ionischen Flüssigkeit, beispielsweise N-methyl-N-propylpyrrolidinium-Bis(trifluormethansulfonyl)imid (PYR13TFSI) und/oder N-methyl-N-propylpyrrolidinium-Bis(fluorsulfonyl)imid (PYR13FSI), insbesondere N-methyl-N-propylpyrrolidinium-Bis(trifluormethansulfonyl)imid (PYR13TFSI), gemischt werden.

Beim Mischen des mindestens einen Elektrodenmaterials mit dem mindestens einen organischen Elektrolytlösungsmittel und/oder der mindestens einen ionischen Flüssigkeit, kann insbesondere mindestens ein organisches Elektrolytlösungsmittel und/oder mindestens eine ionische Flüssigkeit mit einem verringerten Wassergehalt beziehungsweise mindestens ein getrocknetes organisches Elektrolytlösungsmittel und/oder mindestens eine getrocknete ionische Flüssigkeit eingesetzt werden. Zum Beispiel kann dabei mindestens ein, zumindest im Wesentlichen wasserfreies, organisches Elektrolytlösungsmittel und/oder mindestens eine, zumindest im Wesentlichen wasserfreie, ionische Flüssigkeit eingesetzt werden. Dabei kann vorteilhafterweise der dadurch erzielte trocknende Effekt desto größer sein, je geringer der Wassergehalt des dabei eingesetzten organischen Elektrolytlösungsmittels und/oder der dabei eingesetzten ionischen Flüssigkeit ist.

Im Rahmen einer weiteren Ausführungsform erfolgt das Abtrennen des mindestens einen Elektrodenmaterials von dem mindestens einen organischen Elektrolytlösungsmittels und/oder der mindestens einen ionischen Flüssigkeit, beispielsweise in Verfahrensschritt b), durch Nasssieben und/oder Filtrieren und/oder Zentrifugieren und/oder thermisch und/oder durch ein Vakuum. Beispielsweise kann das Abtrennen des mindestens einen Elektrodenmaterials von dem mindestens einen organischen Elektrolytlösungsmittels und/oder der mindestens einen ionischen Flüssigkeit, beispielsweise in Verfahrensschritt b), dadurch erfolgen, dass das mindestens eine Elektrodenmaterial zunächst durch Nasssieben und/oder Filtrieren und/oder Zentrifugieren, insbesondere durch Nasssieben und/oder Filtrieren, zum Beispiel durch eine, beispielsweise vakuumunterstützte, Bandfiltration, abgetrennt. Beispielsweise kann das mindestens eine Elektrodenmaterial anschließend thermisch und/oder unter Vakuum getrocknet wird. Durch das Nasssieben und/oder Filtrieren, zum Beispiel eine, beispielsweise vakuumunterstützte, Bandfiltration, und/oder Zentrifugieren, insbesondere durch dass Nasssieben und/oder Filtrieren, kann vorteilhafterweise ein Großteil des mindestens einen organischen Elektrolytlösungsmittels und/oder der mindestens einen ionischen Flüssigkeit auf einfache, schnelle und energieeffiziente Weise entfernt werden. Dadurch kann wiederum das thermische Trocknen und/oder das Vakuum-Trocknen einfacher, schneller und energieeffizienter durchgeführt werden. Das Nasssieben oder auch Filtrieren, beispielsweise durch eine, insbesondere vakuumunterstützte, Bandfiltration, kann bei oberflächenfunktionalisierten und/oder beschichteten Materialien, insbesondere Partikeln, besonders vorteilhaft sein.

Für ein thermisches Abtrennen und/oder ein Abtrennen unter Vakuum kann es vorteilhaft sein, wenn das mindestens eine organische Elektrolytlösungsmittel und/oder die mindestens eine ionische Flüssigkeit ein positives Azeotrop bilden.

Durch das Abtrennen des mindestens einen Elektrodenmaterials von dem mindestens einen organischen Elektrolytlösungsmittels und/oder der mindestens einen ionischen Flüssigkeit, beispielsweise in Verfahrensschritt b), kann vorteilhafterweise bewirkt werden, dass das mindestens eine organische Elektrolytlösungsmittel und/oder die mindestens eine ionische Flüssigkeit zusammen mit darin gelöstem Wasser größtenteils entfernt werden.

Aus intrapartikulären Poren und gegebenenfalls auch interpartikulärem (Poren-) Volumen kann das mindestens eine organische Elektrolytlösungsmittel und/oder die mindestens eine ionische Flüssigkeit nicht und insbesondere soll auch nicht entfernt werden, damit Rückstände, beispielsweise Spuren, des mindestens einen Elektrolytlösungsmittel und/oder der mindestens einem ionischen Flüssigkeit in dem mindestens einen abgetrennten Elektrodenmaterial, beispielsweise in intrapartikulären und/oder interpartikulären Poren und/oder adsorbiert an der Oberfläche des mindestens einen abgetrennten Elektrodenmaterials, verbleiben und die lonenleitfähigkeit und ionische Anbindung verbessern.

Insbesondere können daher nach dem Abtrennen des mindestens einen Elektrodenmaterials von dem mindestens einen organischen Elektrolytlösungsmittel und/oder der mindestens einen ionischen Flüssigkeit Rückstände, insbesondere Spuren, des organischen Elektrolytlösungsmittels und/oder der mindestens einen ionischen Flüssigkeit in dem mindestens einen abgetrennten Elektrodenaktivmaterial, insbesondere in Poren, beispielsweise in intrapartikulären und/oder interpartikulären Poren, insbesondere in intrapartikulären Poren, und/oder adsorbiert an der Oberfläche, beispielsweise der äußeren Oberfläche und gegebenenfalls auch der inneren Oberfläche, des mindestens einen abgetrennten Elektrodenmaterials, verbleiben und beispielsweise durch Laboranalysemethoden nachgewiesen werden.

Daher kann das mindestens eine abgetrennte Elektrodenmaterial insbesondere Rückstände, insbesondere Spuren, des mindestens einen organischen Elektrolytlösungsmittels und/oder der mindestens einen ionischen Flüssigkeit, beispielsweise in intrapartikulären und/oder interpartikulären Poren, insbesondere in intrapartikulären Poren, und/oder adsorbiert an dessen Oberfläche, beispielsweise dessen äußerer Oberfläche und gegebenenfalls auch innerer Oberfläche, enthalten.

Die Rückstände, insbesondere Spuren, des organischen Elektrolytlösungsmittels und/oder der mindestens einen ionischen Flüssigkeit können dabei noch geringe Spuren von Wasser enthalten. Gegebenenfalls können sich jedoch geringe Spuren von Wasser, vorzugsweise in einer möglichst exakt definierten Menge, vorteilhaft auf eine Ausbildung einer idealen SEI-Schicht auswirken.

Insbesondere kann daher vor dem Ausbilden einer Elektrode aus dem mindestens einen abgetrennten Elektrodenmaterial, beispielsweise vor Verfahrenschritt c), zum Beispiel in einem Verfahrensschritt b*), der Wassergehalt des mindestens einen abgetrennten Elektrodenmaterials bestimmt werden. Dies kann beispielsweise mittels Gaschromatographie und/oder mittels einer von D. Sherwood, Mekala V. Reddy, Ivan Cole, Bosco Emmanuel, in Journal of Electroanalytical Chemistry, 725 (2014), S. 1-6 beschriebenen Methode und/oder mittels der Kelvin Gleichung erfolgen. Zum Beispiel kann dabei insofern der Wassergehalt des mindestens einen Elektrodenmaterials unter dem bestimmten Grenzwert liegt, aus dem mindestens einen abgetrennten Elektrodenmaterial, beispielsweise in Verfahrensschritt c), eine Elektrode ausgebildet werden.

Um einen Wassergehalt des mindestens einen abgetrennten Elektrodenmaterials weiter zu senken, kann das mindestens eine, beispielsweise in Verfahrensschritt b), abgetrennte Elektrodenmaterial, beispielsweise in einem, insbesondere dem Verfahrensschritt c) vorgeschalteten, Verfahrensschritt a1), erneut mit mindestens einem, insbesondere wasserlösenden, organischen Elektrolytlösungsmittel, insbesondere mit einem geringeren Wassergehalt als das mindestens eine zuvor, beispielsweise in Verfahrensschritt b), abgetrennte organische Elektrolytlösungsmittel, und/oder mit mindestens einer, insbesondere wasserlösenden, ionischen Flüssigkeit, insbesondere mit einem geringeren Wassergehalt als die mindestens eine zuvor, beispielsweise in Verfahrensschritt b), abgetrennte ionische Flüssigkeit, gemischt werden. Dabei kann das mindestens eine organische Elektrolytlösungsmittel und/oder die mindestens eine ionische Flüssigkeit weiteres Wasser aus dem mindestens einen Elektrodenmaterial lösen, insbesondere heraus lösen, insbesondere wobei sich der Wassergehalt des mindestens einen Elektrodenmaterials weiter senken und sich der Wassergehalt des mindestens einen organischen Elektrolytlösungsmittel und/oder der mindestens einen ionischen Flüssigkeit erhöhen kann. Zum Beispiel in einem Verfahrenschritt b1), kann das mindestens eine Elektrodenmaterial (dann), beispielsweise nach einer bestimmten Mischzeit und/oder Verweilzeit, wieder von dem mindestens einen organischen Elektrolytlösungsmittel und/oder der mindestens einen wasserhaltigen ionischen Flüssigkeit abgetrennt werden. Durch ein derartiges, gegebenenfalls wiederholtes, diskontinuierliches Mischen kann vorteilhafterweise Wasser aus dem mindestens einen abgetrennten Elektrodenmaterial entfernt werden. Aus dem mindestens einen abgetrennten Elektrodenmaterial kann dann, beispielsweise in Verfahrensschritt c), eine Elektrode ausgebildet werden.

Im Rahmen einer weiteren Ausführungsform wird vor dem Ausbilden einer Elektrode aus dem mindestens einen abgetrennten Elektrodenmaterial, beispielsweise vor Verfahrenschritt c), zum Beispiel in einem Verfahrensschritt b*), der Wassergehalt des mindestens einen abgetrennten Elektrodenmaterials bestimmt. Zum Beispiel kann dabei insofern der Wassergehalt des mindestens einen abgetrennten Elektrodenmaterials unter einem bestimmten Grenzwert liegt, beispielsweise in Verfahrensschritt c) aus dem mindestens einen abgetrennten Elektrodenmaterial eine Elektrode ausgebildet werden. Insofern der Wassergehalt des mindestens einen abgetrennten Elektrodenmaterials jedoch größer oder gleich dem bestimmten Grenzwert ist, kann zum Beispiel das mindestens eine abgetrennte Elektrodenmaterial, beispielsweise Verfahrensschritt a1), erneut mit mindestens einem, insbesondere wasserlösenden, organischen Elektrolytlösungsmittel und/oder mit mindestens einer, insbesondere wasserlösenden, ionischen Flüssigkeit, insbesondere mit einem geringeren Wassergehalt als das mindestens eine zuvor, beispielsweise in Verfahrensschritt b), abgetrennte organische Elektrolytlösungsmittel und/oder als die mindestens eine zuvor, beispielsweise in Verfahrensschritt b), abgetrennte ionische Flüssigkeit, gemischt werden, und (dann), beispielsweise nach einer bestimmten Mischzeit und/oder Verweilzeit, beispielsweise in Verfahrenschritt b1) das mindestens eine Elektrodenmaterial wieder von dem mindestens einen organischen Elektrolytlösungsmittel und/oder der mindestens einen wasserhaltigen ionischen Flüssigkeit abgetrennt werden.

Danach kann zum Beispiel der Wassergehalt des mindestens einen abgetrennten Elektrodenmaterials, beispielsweise in einem Verfahrensschritt b1*), erneut bestimmt werden. Zum Beispiel kann insofern der Wassergehalt des mindestens einen abgetrennten Elektrodenmaterials nun unter dem bestimmten Grenzwert liegt, beispielsweise in Verfahrensschritt c), aus dem mindestens einen abgetrennten Elektrodenmaterial eine Elektrode ausgebildet werden. Insofern der Wassergehalt des mindestens einen abgetrennten Elektrodenmaterials jedoch immer noch größer oder gleich dem bestimmten Grenzwert ist, kann zum Beispiel das Mischen des mindestens einen abgetrennten Elektrodenmaterials mit dem mindestens einen, insbesondere wasserlösenden, organischen Elektrolytlösungsmittel und/oder der mindestens einen, insbesondere wasserlösenden, ionischen Flüssigkeit, beispielsweise Verfahrensschritt a1), und das wieder Abtrennen davon, beispielsweise Verfahrensschritt b1), und das Bestimmen des Wassergehalts des mindestens einen abgetrennten Elektrodenmaterials, beispielsweise Verfahrensschritt b1*, solange wiederholt wird bis der Wassergehalt des mindestens einen abgetrennten Elektrodenmaterials unter dem bestimmten Grenzwert liegt. Dabei kann (dann) aus dem mindestens einen abgetrennten Elektrodenmaterial eine Elektrode ausgebildet werden.

Das mindestens eine, beispielsweise in Verfahrensschritt b) oder b1), abgetrennte organische Elektrolytlösungsmittel und/oder die mindestens eine, beispielsweise in Verfahrensschritt b) oder b1), abgetrennte ionische Flüssigkeit können zum Beispiel, beispielsweise in einem Verfahrensschritt a0), zum Beispiel durch Destillation und/oder durch ein Trockenmittel, zum Beispiel ein Molsieb, insbesondere unter einer Verringerung des Wassergehalts, getrocknet werden. So kann das mindestens eine organische Elektrolytlösungsmittel und/oder die mindestens eine ionische Flüssigkeit wiederaufbereitet und zum Beispiel erneut, beispielsweise in einem Verfahrensschritt a1), eingesetzt werden.

Im Rahmen einer weiteren Ausführungsform wird, beispielsweise in Verfahrensschritt c), das mindestens eine abgetrennte Elektrodenaktivmaterial mit mindestens einem Polymer zu einer Mischung gemischt und aus der Mischung eine Elektrode ausgebildet.

Im Rahmen einer weiteren Ausführungsform umfasst oder ist das mindestens eine Polymer, beispielsweise welches in Verfahrensschritt c), zum Beispiel im später erläuterten Verfahrensschritt c1) und/oder c1*), eingesetzt wird, mindestens ein ionenleitfähiges und/oder ionenleitendes, beispielsweise lithiumionenleitfähiges und/oder lithiumionenleitendes, Polymer, zum Beispiel mindestens ein Polyalkylenoxid, wie Polyethylenoxid (PEO), beispielsweise mit > 50 Wiederholungseinheiten, und/oder Carboxymethylcellulose (CMC), und/oder mindestens ein nicht-ionenleitfähiges und/oder nicht-ionenleitendes,

beispielsweise nicht-lithiumionenleitfähiges und/oder nicht-lithiumionenleitendes, Polymer, zum Beispiel Polytetrafluorethylen (PTFE) und/oder Styrol-Butadien-Kautschuk (SBR).

Im Rahmen einer weiteren Ausführungsform wird, beispielsweise in Verfahrensschritt c), zum Beispiel in einem Verfahrensschritt c1), das mindestens eine abgetrennte Elektrodenaktivmaterial trocken, gegebenenfalls ohne Flüssigkeitszugabe, mit dem mindestens einen Polymer zu einer trockenen Mischung, beispielsweise in Form eines trockenen, insbesondere homogenen und/oder rieselfähigen, Pulvers, gemischt.

Im Rahmen einer Ausgestaltung dieser Ausführungsform umfasst das trockene Mischen, beispielsweise in Verfahrensschritt c), zum Beispiel in Verfahrensschritt c1), mindestens einen Mischprozess mit einer hohen Scherbelastung, beispielsweise durch eine Strahlmühle, in dem das mindestens eine Polymer, insbesondere das mindestens eine nicht-ionenleitfähige und/oder nichtionenleitende, beispielsweise nicht-lithiumionenleitfähige und/oder nichtlithiumionenleitende, Polymer, zum Beispiel Polytetrafluorethylen (PTFE), zumindest teilweise fibrilliert wird.

Im Rahmen einer weiteren Ausführungsform wird, beispielsweise in Verfahrensschritt c), zum Beispiel in einem dem Verfahrensschritt c1) nachgeschalteten Verfahrensschritt c2), aus der trockenen Mischung eine Elektrode, insbesondere in Form eines selbsttragenden Films und/oder einer Beschichtung, beispielsweise auf einem Elektrodenstromleiter, ausgebildet wird.

Im Rahmen einer weiteren Ausführungsform wird, beispielsweise in Verfahrensschritt c), zum Beispiel in Verfahrensschritt c2), aus der trockenen Mischung eine Elektrode, insbesondere in Form eines selbsttragenden Films und/oder einer Beschichtung, beispielsweise auf einem Elektrodenstromleiter, durch einen trockenen Herstellungsprozess, insbesondere durch einen trockenen Pressvorgang und/oder durch Trockenbeschichten, beispielsweise mittels Extrudieren und/oder Kalandrieren, gegebenenfalls ohne Flüssigkeitszugabe, ausgebildet.

Im Fall einer Elektrodenausbildung durch einen trockenen Herstellungsprozess, kann, beispielsweise in Verfahrensschritt a), insbesondere mindestens ein wasserlösendes, organisches Lösungsmittel eingesetzt werden.

Im Rahmen einer weiteren Ausführungsform wird, beispielsweise in Verfahrensschritt c), zum Beispiel in einem Verfahrensschritt c1*), das mindestens eine abgetrennte Elektrodenaktivmaterial mit dem mindestens einen Polymer und mit mindestens einem organischen Lösungsmittel zu einer, insbesondere nassen, Mischung, beispielsweise in Form einer Paste beziehungsweise eines so genannten Slurrys oder in Form einer Extrusionsmasse, gemischt. , Das mindestens eine organische Lösungsmittel kann dabei insbesondere zur Lösung und/oder Suspension des mindestens einen Polymers, wie zum Beispiel N-Methyl-Pyrrolidon (NMP), und/oder als Verarbeitungshilfsmittel, zum Beispiel als Extrusionshilfsmittel, ausgelegt sein. Beispielsweise in Verfahrensschritt c), zum Beispiel in einem dem Verfahrensschritt c1*) nachgeschalteten Verfahrensschritt c2*, kann (dann) aus der, insbesondere nassen, Mischung die Elektrode, beispielsweise in Form eines Films und/oder einer Beschichtung, zum Beispiel auf einem Elektrodenstromleiter, durch einen nassen Herstellungsprozess, insbesondere einen so genannten Slurry-Prozess, beispielsweise durch Nassbeschichten und/oder Drucken, ausgebildet werden. Das mindestens eine organische Lösungsmittel kann dabei nach der Ausbildung der Elektrode, insbesondere unter Ausbildung einer porösen Elektrode, beispielsweise durch einen Trocknungsprozess, wieder entfernt werden.

Durch das mindestens eine abgetrennte Elektrodenmaterial kann vorteilhafterweise auch bei einer derartigen, insbesondere nassen, Prozessierung die Trocknungszeit, insbesondere zum Entfernen von Wasser, verringert werden.

Im Fall einer Elektrodenausbildung durch einen nassen, insbesondere lösungsmittelbasierten, Herstellungsprozess, kann, beispielsweise in Verfahrensschritt a), insbesondere mindestens eine ionische Flüssigkeit eingesetzt werden.

Im Rahmen einer weiteren Ausführungsform umfasst oder ist das mindestens eine Polymer, beispielsweise welches in Verfahrensschritt c), zum Beispiel in Verfahrensschritt c1) und/oder c1*), eingesetzt wird, mindestens ein ionenleitfähiges und/oder ionenleitendes, beispielsweise lithiumionenleitfähiges und/oder lithiumionenleitendes, Polymer. Insbesondere kann dabei, beispielsweise in Verfahrensschritt c), zum Beispiel in Verfahrensschritt c1) und/oder c1*), zusätzlich mindestens ein Leitsalz, beispielsweise Lithium-Leitsalz, zu der Mischung gemischt werden. So kann aus der Mischung eine Elektrode ausgebildet werden, welche bereits als solche, beispielsweise ohne weitere Zugabe von einem Flüssigelektrolyt, als Elektrode einsatzfähig sein kann.

Im Rahmen einer weiteren Ausführungsform wird jedoch die aus der, insbesondere trockenen oder nassen, Mischung ausgebildete Elektrode, beispielsweise in Verfahrensschritt c), zum Beispiel in einem dem Verfahrensschritt c2) nachgeschalteten Verfahrensschritt c3) oder in einem dem Verfahrensschritt c2*) nachgeschalteten Verfahrensschritt c3*), mit mindestens einem Flüssigelektrolyten versetzt, insbesondere getränkt. Dabei können Poren und/oder Zwischenräume in der Elektrode mit dem mindestens einen Flüssigelektrolyten gefüllt und gegebenenfalls ein Polymer-Gel-Elektrolyt ausgebildet werden.

Dabei kann der mindestens eine Flüssigelektrolyt mindestens ein Elektrolytlösungsmittel und mindestens ein, darin gelöstes Leitsalz, beispielsweise Lithium-Leitsalz, umfassen. Dabei kann das in Verfahrensschritt c), zum Beispiel in Verfahrensschritt c3) oder Verfahrensschritt c3*), verwendete mindestens eine Elektrolytlösungsmittel unterschiedlich oder gleich dem in Verfahrensschritt a) verwendeten Elektrolytlösungsmittel und/oder das in Verfahrensschritt c), zum Beispiel in Verfahrensschritt c3) oder Verfahrensschritt c3*), verwendete mindestens eine Leitsalz unterschiedlich oder gleich dem in Verfahrensschritt a) verwendeten Leitsalz und/oder der in Verfahrensschritt c), zum Beispiel in Verfahrensschritt c3) oder Verfahrensschritt c3*), verwendete mindestens eine Flüssigelektrolyt unterschiedlich oder gleich dem in Verfahrensschritt a) verwendeten Flüssigelektrolyten sein.

Insbesondere kann jedoch dabei in Verfahrensschritt a) mindestens eine ionische Flüssigkeit und in Verfahrensschritt c), zum Beispiel in Verfahrensschritt c3) oder Verfahrensschritt c3*), mindestens ein Flüssigelektrolyt eingesetzt werden. So kann das Befüllen der Zelle mit dem mindestens einen Flüssigelektrolyten und/oder die Funktion der Zelle verbessert werden, insbesondere in dem beim, beispielsweise vakuumunterstützten, Befüllen der Zelle mit dem mindestens einen Flüssigelektrolyten durch die mindestens eine ionische Flüssigkeit Siedeeffekte in mit der mindestens einen ionischen Flüssigkeit gefüllten, intrapartikulären und/oder interpartikulären Poren vermieden werden können und/oder die mit der mindestens einen ionischen Flüssigkeit gefüllten, intrapartikulären und/oder interpartikulären Poren mit der mindestens einen ionischen Flüssigkeit gefüllt bleiben können.

Im Rahmen einer weiteren Ausführungsform werden beim Abtrennen des mindestens einen Elektrodenmaterials von dem mindestens einen organischen Elektrolytlösungsmittel und/oder der mindestens einen ionischen Flüssigkeit, beispielsweise in Verfahrensschritt b), Partikelgrößen des mindestens einen Elektrodenmaterials, insbesondere durch Nasssieben, klassiert. Dabei kann vorteilhafterweise eine Größenfraktion des mindestens einen Elektrodenaktivmaterials abgetrennt und, beispielsweise in Verfahrensschritt c), zur Herstellung der Elektrode verwendet werden. Zum Beispiel kann so eine Größenfraktion abgetrennt werden, welche zum Beispiel für eine Polymer-Fibrillierung und/oder für eine trockene Prozessierung oder für eine nasse Prozessierung, zum Beispiel für einen Slurry-Prozess, zum Beispiel für eine fließfähige Paste mit einer definierten Partikelgrößenverteilung und/oder einem geringen Lösungsmittelgehalt (und damit einer kostengünstigen Trocknung), vorteilhaft ist. Zum Beispiel kann zur Polymer-Fibrillierung eine Größenfraktion mit einer durchschnittlichen Partikelgröße von mehr als 2 µm, insbesondere in einem Bereich von ≥ 5 µm bis ≤ 20 µm, vorteilhaft sein. Eine Klassierung durch Nasssieben kann bei kleinen Partikeldurchmessern und/oder oberflächenfunktionalisierten und/oder beschichteten Materialien, insbesondere Partikeln, besonders vorteilhaft sein.

Im Rahmen einer weiteren Ausführungsform umfasst oder ist das mindestens eine Elektrodenmaterial mindestens ein Elektrodenaktivmaterial.

Im Rahmen einer Ausgestaltung dieser Ausführungsform umfasst oder ist das mindestens eine Elektrodenmaterial mindestens ein Elektrodenaktivmaterial für eine positive Elektrode, beispielsweise mindestens ein übergangsmetalloxid-basiertes Elektrodenaktivmaterial für eine positive Elektrode, zum Beispiel mindestens ein (Lithium-)Nickel- und/oder -Cobalt- und/oder -Mangan-Oxid, zum Beispiel mindestens ein (Lithium-)Nickel- und/oder -Cobalt- und/oder -Mangan-Schichtoxid, beispielsweise der allgemeinen chemischen Formel LiNiₓCo_{y}Mn_{z}O₂, und/oder mindestens ein (Lithium-)Nickel- und/oder -Cobalt- und/oder -Mangan-Spinel, beispielsweise Lithium-Mangan-Spinell (LiMn₂O₄). Für übergangsmetalloxid-basierte Elektrodenaktivmaterialien kann das Verfahren besonders vorteilhaft sein, da diese an ihrer Oberflächen Wassermoleküle so binden können, so dass sich diese, zum Beispiel auch in Vakkuumbeschichtungsanlagen und/oder durch Ausheizen bei über 400°C im Vakuum, nur mit höchstem Aufwand entfernen lassen.

Im Rahmen einer anderen Ausgestaltung dieser Ausführungsform umfasst oder ist das mindestens eine Elektrodenmaterial mindestens ein Elektrodenaktivmaterial für eine negative Elektrode, beispielsweise mindestens ein kohlenstoffbasiertes Elektrodenaktivmaterial für eine negative Elektrode, zum Beispiel Graphit und/oder amorphen Kohlenstoff, wie so genannte Hard Carbons und/oder Soft Carbons.

Im Rahmen einer weiteren, alternativen oder zusätzlichen Ausführungsform umfasst oder ist das mindestens eine Elektrodenmaterial, gegebenenfalls weiterhin, mindestens einen, insbesondere partikulären, Elektrodenzusatzstoff, beispielsweise mindestens ein elektrisches Leitmittel, zum Beispiel mindestens ein kohlenstoffbasiertes Leitmittel, wie Graphit und/oder amorphen Kohlenstoff, zum Beispiel (Leit-)Ruß, und/oder Kohlenstoffnanoröhren.

Hinsichtlich weiterer technischer Merkmale und Vorteile des erfindungsgemäßen Verfahrens wird hiermit explizit auf die Erläuterungen im Zusammenhang mit der erfindungsgemäßen Elektrode und der erfindungsgemäßen Zelle sowie auf die Figuren und die Figurenbeschreibung verwiesen.

Ein weiterer Gegenstand ist eine Elektrode für eine elektrochemische Zelle, insbesondere für eine Batteriezelle und/oder Brennstoffzelle und/oder Elektrolysezelle, welche durch ein erfindungsgemäßes Verfahren hergestellt ist.

Eine durch ein erfindungsgemäßes Verfahren hergestellte Elektrode kann insbesondere - beispielsweise sowohl im Fall einer Elektrodenherstellung durch einen trockenen Herstellungsprozess als auch im Fall einer Elektrodenherstellung durch einen nasschemischen Herstellungsprozess, insbesondere adsorbiert an und/oder insbesondere absorbiert, beispielsweise in Poren, in dem mindestens einen Elektrodenmaterial Rückstände, insbesondere Spuren, von dem mindestens einen organischen Elektrolytlösungsmittel, zum Beispiel Gammabutyrolacton (GBL), und/oder von der mindestens einen ionischen Flüssigkeit aufweisen.

Im Fall einer Elektrodenherstellung durch einen trockenen Herstellungsprozess kann es sich hierbei um mindestens ein organisches Elektrolytlösungsmittel und/oder um mindestens eine ionische Flüssigkeit, insbesondere um mindestens ein organisches Elektrolytlösungsmittel handeln.

Im Fall einer Elektrodenherstellung durch einen nasschemischen Herstellungsprozess kann es sich hierbei insbesondere um mindestens ein organisches Elektrolytlösungsmittel, welches unterschiedlich zu im Rahmen des nasschemischen Herstellungsprozesses verwendeten Lösungsmitteln und/oder Elektrolytlösungsmitteln eines Flüssigelektrolyten ist, und/oder um mindestens eine ionische Flüssigkeit handeln.

Eine durch einen trockenen Herstellungsprozesses auf der Basis eines Mischprozesses mit einer hohen Scherbelastung hergestellte Elektrode kann dabei insbesondere zudem mindestens ein zumindest teilweise fibrilliertes Polymer aufweisen.

Eine erfindungsgemäß hergestellte Elektrode kann beispielsweise, zum Beispiel durch Zerlegung einer damit ausgestatteten Zelle, und Analyse der Elektrode, beispielsweise mittels Gaschromatographie und/oder lonenchromatographie und anschließender photometrischer Detektion, nachgewiesen werden.

Hinsichtlich weiterer technischer Merkmale und Vorteile der erfindungsgemäßen Elektrode wird hiermit explizit auf die Erläuterungen im Zusammenhang mit dem erfindungsgemäßen Verfahren und der erfindungsgemäßen Zelle sowie auf die Figuren und die Figurenbeschreibung verwiesen.

Ferner betrifft die Erfindung eine elektrochemische Zelle, beispielsweise eine Batteriezelle und/oder Brennstoffzelle und/oder Elektrolysezelle, welche mindestens eine durch ein erfindungsgemäßes Verfahren hergestellte Elektrode und/oder mindestens eine erfindungsgemäße Elektrode umfasst. Die Zelle kann beispielsweise eine Festelektrolyt-Zelle, insbesondere eine Polymerelektrolyt-Zelle, oder eine Flüssigelektrolyt-Zelle sein. Insbesondere kann die Zelle eine Polymerelektrolyt-Zelle sein. Das Verfahren kann besonders gut zur Herstellung von Elektroden für Polymerelektrolyt-Zelle geeignet sein, da sich Wasser aus Polymerelektrolyten durch herkömmliche Methoden besonders schlecht entfernt werden lässt.

Hinsichtlich weiterer technischer Merkmale und Vorteile der erfindungsgemäßen Zelle wird hiermit explizit auf die Erläuterungen im Zusammenhang mit dem erfindungsgemäßen Verfahren und der erfindungsgemäßen Elektrode sowie auf die Figuren und die Figurenbeschreibung verwiesen.

### Zeichnungen

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken. Es zeigen
- Fig. 1: ein schematisches Flussdiagramm zur Veranschaulichung einer ersten Ausführungsform des erfindungsgemäßen Verfahrens;
- Fig. 2: ein schematisches Flussdiagramm zur Veranschaulichung einer zweiten Ausführungsform des erfindungsgemäßen Verfahrens;
- Fig. 3: ein schematisches Flussdiagramm zur Veranschaulichung einer dritten Ausführungsform des erfindungsgemäßen Verfahrens; und
- Fig. 4: ein schematisches Flussdiagramm zur Veranschaulichung einer vierten Ausführungsform des erfindungsgemäßen Verfahrens.

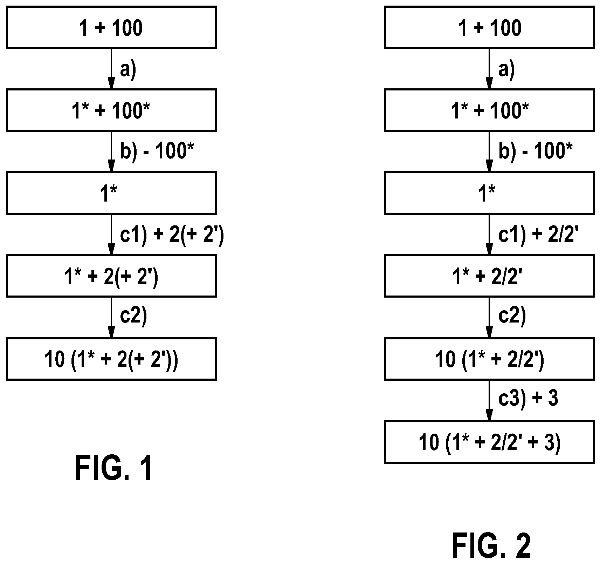

Die Figuren 1 bis 4 zeigen unterschiedliche Ausführungsformen eines Verfahrens zur Herstellung einer Elektrode 10 für eine elektrochemische Zelle, insbesondere für eine Batteriezelle und/oder Brennstoffzelle und/oder Elektrolysezelle, in dem in einem Verfahrensschritt a) mindestens ein Elektrodenmaterial 1 und mindestens ein wasserlösendes, organisches Elektrolytlösungsmittel und/oder mindestens eine wasserlösende, ionische Flüssigkeit 100 gemischt werden. Dabei löst das mindestens eine organische Elektrolytlösungsmittel und/oder die mindestens eine ionische Flüssigkeit 100 Wasser aus dem mindestens einen Elektrodenmaterial 1, wobei sich der Wassergehalt des mindestens einen Elektrodenmaterials 1* verringern und der Wassergehalt des mindestens einen organischen Elektrolytlösungsmittel und/oder der mindestens einen ionischen Flüssigkeit 100* erhöhen kann. Das mindestens eine Elektrodenmaterial 1* wird dann, beispielsweise nach einer bestimmten Mischzeit und/oder Verweilzeit, in einem Verfahrensschritt b) wieder von dem mindestens einen organischen Elektrolytlösungsmittel und/oder der mindestens einen ionischen Flüssigkeit 100* abgetrennt. Dabei kann das mindestens eine abgetrennte Elektrodenmaterial 1* insbesondere Rückstände, beispielsweise Spuren, des mindestens einen organischen Elektrolytlösungsmittels und/oder der mindestens einen ionischen Flüssigkeit 100*, insbesondere in intrapartikulären und/oder interpartikulären Poren und/oder adsorbiert an dessen Oberfläche, enthalten. Das mindestens eine abgetrennte Elektrodenmaterial 1* kann dabei mit mindestens einem Polymer 2,2' zu einer Mischung gemischt und aus der Mischung eine Elektrode 10 ausgebildet werden.

In der in Figur 1 gezeigten ersten Ausführungsform wird das mindestens eine abgetrennte Elektrodenmaterial 1* in einem Verfahrensschritt c1) trocken mit mindestens einem ionenleitfähigen und/oder ionenleitenden, beispielsweise lithiumionenleitfähigen und/oder lithiumionenleitenden, Polymer 2 und gegebenenfalls mindestens einem Leitsalz, beispielsweise Lithium-Leitsalz, zu einer trockenen Mischung gemischt. Gegebenenfalls kann dabei zusätzlich mindestens ein nicht-ionenleitfähiges und/oder nicht-ionenleitendes, beispielsweise nicht-lithiumionenleitfähiges und/oder nicht-lithiumionenleitendes, Polymer 2' zugemischt werden. Gegebenenfalls kann das trockene Mischen mindestens einen Mischprozess mit einer hohen Scherbelastung umfassen, in dem das mindestens eine Polymer 2,2', insbesondere das mindestens eine nicht-ionenleitfähiges und/oder nicht-ionenleitendes Polymer 2', zumindest teilweise fibrilliert wird. In einem dem Verfahrensschritt c1) nachgeschalteten Verfahrensschritt c2) wird dann aus der trockenen Mischung 1*+2(2') eine Elektrode 10 durch einen trockenen Herstellungsprozess, insbesondere durch einen trockenen Pressvorgang und/oder durch Trockenbeschichten, ausgebildet.

Die in Figur 2 gezeigte zweite Ausführungsform unterscheidet sich dadurch von der in Figur 1 gezeigten ersten Ausführungsform, dass das mindestens eine Polymer 2,2' mindestens ein ionenleitfähiges und/oder ionenleitendes, insbesondere lithiumionenleitfähiges und/oder lithiumionenleitendes, Polymer 2 und/oder mindestens ein nicht-ionenleitfähiges und/oder nicht-ionenleitendes, insbesondere nicht-lithiumionenleitfähiges und/oder nicht-lithiumionenleitendes, Polymer 2' umfasst. Um im Fall lediglich mindestens eines nicht-ionenleitfähigen und/oder nicht-ionenleitenden, insbesondere nicht-lithiumionenleitfähigen und/oder nicht-lithiumionenleitenden, Polymers 2' die Elektrode 10 mit einer lonenleitfähigkeit auszustatten und/oder diese gegebenenfalls trotz der Gegenwart mindestens eines ionenleitfähigen und/oder ionenleitenden, insbesondere lithiumionenleitfähigen und/oder lithiumionenleitenden, Polymers 2 zu erhöhen, umfasst das Verfahren weiterhin einen Verfahrensschritt c3) in dem die aus der Mischung 1*+2(2') ausgebildete Elektrode 10 mit mindestens einem Flüssigelektrolyten 3 getränkt wird, wobei Poren und/oder Zwischenräume in der Elektrode 10 mit dem mindestens einen Flüssigelektrolyten 3 gefüllt werden. Insofern das mindestens eine Polymer 2,2' ein gelbildendes Polymer umfasst, kann so insbesondere ein Polymer-Gel-Elektrolyt ausgebildet werden.

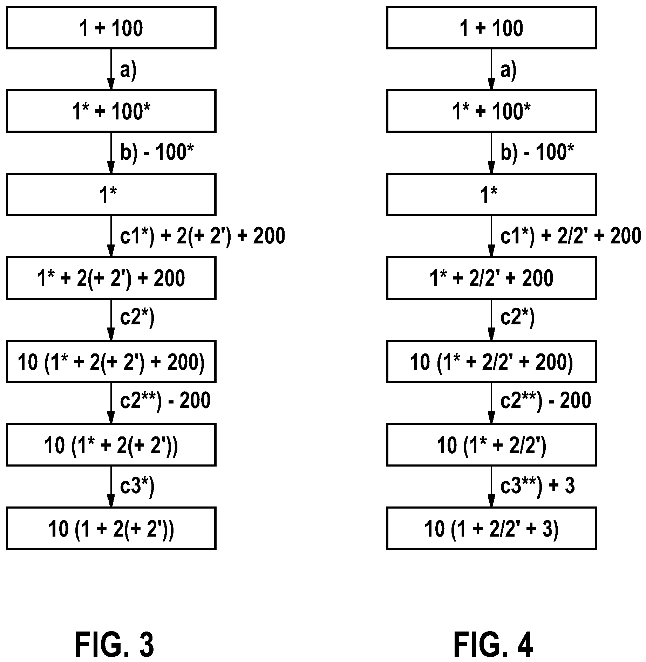

Die in Figur 3 gezeigte dritte Ausführungsform unterscheidet sich dadurch von der in Figur 1 gezeigten ersten Ausführungsform, dass das mindestens eine abgetrennte Elektrodenmaterial 1* in einem Verfahrensschritt c1*) mit mindestens einem ionenleitfähigen und/oder ionenleitenden, beispielsweise lithiumionenleitfähigen und/oder lithiumionenleitenden, Polymer 2 und gegebenenfalls mindestens einem Leitsalz, beispielsweise Lithium-Leitsalz, und mit mindestens einem organischen Lösungsmittel 200 zu einer nassen Mischung, insbesondere in Form einer Paste oder einer Extrusionsmasse, gemischt wird. In einem dem Verfahrensschritt c1*) nachgeschalteten Verfahrensschritt c2*) wird dann aus der nassen Mischung eine Elektrode 10 durch einen nassen Herstellungsprozess, insbesondere durch Nassbeschichten und/oder Drucken, ausgebildet. In einem dem Verfahrensschritt c2*) nachgeschalteten Verfahrensschritt c2**) wird dann das mindestens eine organische Lösungsmittel 200 wieder entfernt. In einem Verfahrensschritt c3*) wird die Elektrode 10 verdichtet, um gegebenenfalls beim Entfernen des Lösungsmittels 200 entstandene Poren zu entfernen.

Die in Figur 4 gezeigte vierte Ausführungsform unterscheidet sich dadurch von der in Figur 3 gezeigten dritten Ausführungsform, dass das mindestens eine Polymer 2,2' mindestens ein ionenleitfähiges und/oder ionenleitendes, insbesondere lithiumionenleitfähiges und/oder lithiumionenleitendes, Polymer 2 und/oder mindestens ein nicht-ionenleitfähiges und/oder nicht-ionenleitendes, insbesondere nicht-lithiumionenleitfähiges und/oder nicht-lithiumionenleitendes, Polymer 2' umfasst. In einem dem Verfahrensschritt c2**) nachgeschalteten Verfahrensschritt c3) wird hier die Elektrode 10 mit mindestens einem Flüssigelektrolyten 3 getränkt, wobei Poren und/oder Zwischenräume in der Elektrode 10 mit dem mindestens einen Flüssigelektrolyten 3 gefüllt werden. Insofern das mindestens eine Polymer 2,2' ein gelbildendes Polymer umfasst, kann so insbesondere auch hier ein Polymer-Gel-Elektrolyt ausgebildet werden.

## Patentansprüche

1. Verfahren zur Herstellung einer Elektrode (10) für eine elektrochemische Zelle, insbesondere für eine Batteriezelle und/oder Brennstoffzelle und/oder Elektrolysezelle, in dem
- mindestens ein Elektrodenmaterial (1) und mindestens ein wasserlösendes, organisches Elektrolytlösungsmittel und/oder mindestens eine wasserlösende, ionische Flüssigkeit (100) gemischt werden,
- das mindestens eine Elektrodenmaterial (1*) wieder von dem mindestens einen organischen Elektrolytlösungsmittel und/oder der mindestens einen ionischen Flüssigkeit (100*) abgetrennt wird, und
- aus dem mindestens einen abgetrennten Elektrodenmaterial (1*) eine Elektrode (10) ausgebildet wird.

2. Verfahren nach Anspruch 1,
wobei das mindestens eine organische Elektrolytlösungsmittel mindestens ein Lacton, insbesondere Gammabutyrolacton, und/oder mindestens ein organisches Carbonat, insbesondere Ethylencarbonat und/oder Ethylmethylcarbonat und/oder Dimethylcarbonat und/oder Diethylcarbonat und/oder Vinylencarbonat, und/oder mindestens ein Oligo- und/oder Poly-Alkylenoxid mit ≤ 50 Wiederholungseinheiten, insbesondere mindestens ein Oligo- und/oder Poly-Ethylenoxid mit ≤ 30 Wiederholungseinheiten, umfasst oder ist, und/oder
wobei die mindestens eine ionische Flüssigkeit Imid-Anionen, insbesondere Bis(trifluormethansulfonyl)imid-Anionen und/oder Bis(fluorsulfonyl)imid-Anionen und/oder Bis(perfluorethansulfonyl)imid-Anionen, und/oder Tosylat-Anionen und/oder Triflat-Anionen und/oder Pyrrolidinium-Kationen, insbesondere N-methyl-N-propylpyrrolidinium-Kationen, umfasst oder daraus ausgebildet ist.

3. Verfahren nach Anspruch 1 oder 2, wobei mit dem mindestens einen Elektrodenmaterial (1) und mit dem mindestens einen organischen Elektrolytlösungsmittel und/oder mit der mindestens einen ionischen Flüssigkeit (100) zusätzlich mindestens ein Leitsalz und/oder mindestens ein Elektrodenadditiv gemischt wird und/oder wobei das mindestens eine organische Elektrolytlösungsmittel und/oder die mindestens eine ionische Flüssigkeit (100) mindestens ein Leitsalz und/oder mindestens ein Elektrodenadditiv, insbesondere in darin gelöster Form, enthält.

4. Verfahren nach einem der Ansprüche 1 bis 3, wobei das Abtrennen des mindestens einen Elektrodenmaterials (1*) von dem mindestens einen organischen Elektrolytlösungsmittels und/oder der mindestens einen ionischen Flüssigkeit (100*) durch Nasssieben und/oder Filtrieren und/oder Zentrifugieren und/oder thermisch und/oder durch ein Vakuum erfolgt.

5. Verfahren nach einem der Ansprüche 1 bis 4, wobei das mindestens eine abgetrennte Elektrodenmaterial (1*) Rückstände, insbesondere Spuren, des mindestens einen organischen Elektrolytlösungsmittels und/oder der mindestens einen ionischen Flüssigkeit (100*), insbesondere in intrapartikulären und/oder interpartikulären Poren und/oder adsorbiert an dessen Oberfläche, enthält.

6. Verfahren nach einem der Ansprüche 1 bis 5,
wobei vor dem Ausbilden einer Elektrode (10) aus dem mindestens einen abgetrennten Elektrodenmaterial (1*) der Wassergehalt des mindestens einen abgetrennten Elektrodenmaterials (1*) bestimmt wird,
wobei insofern der Wassergehalt des mindestens einen abgetrennten Elektrodenmaterials (1*) unter einem bestimmten Grenzwert liegt, aus dem mindestens einen abgetrennten Elektrodenmaterial (1*) eine Elektrode (10) ausgebildet wird, oder
wobei insofern der Wassergehalt des mindestens einen abgetrennten Elektrodenmaterials (1*) größer oder gleich dem bestimmten Grenzwert ist, das mindestens eine abgetrennte Elektrodenmaterial (1*) erneut mit mindestens einem wasserlösenden, organischen Elektrolytlösungsmittel und/oder mit mindestens einer wasserlösenden ionischen Flüssigkeit (100) gemischt und das mindestens eine Elektrodenmaterial (1*) wieder von dem mindestens einen organischen Elektrolytlösungsmittel und/oder der mindestens einen wasserhaltigen ionischen Flüssigkeit (100*) abgetrennt wird,
wobei der Wassergehalt des mindestens einen abgetrennten Elektrodenmaterials (1*) erneut bestimmt wird,
wobei insofern der Wassergehalt des mindestens einen abgetrennten Elektrodenmaterials (1*) nun unter dem bestimmten Grenzwert liegt, aus dem mindestens einen abgetrennten Elektrodenmaterial (1*) eine Elektrode (10) ausgebildet wird, oder
wobei insofern der Wassergehalt des mindestens einen abgetrennten Elektrodenmaterials (1*) immer noch größer oder gleich dem bestimmten Grenzwert ist, das Mischen des mindestens einen abgetrennten Elektrodenmaterials (1*) mit dem mindestens einen organischen Elektrolytlösungsmittel und/oder der mindestens einen ionischen Flüssigkeit (100) und das wieder Abtrennen davon und das Bestimmen des Wassergehalts des mindestens einen abgetrennten Elektrodenmaterials (1*) solange wiederholt wird bis der Wassergehalt des mindestens einen abgetrennten Elektrodenmaterials (1*) unter dem bestimmten Grenzwert liegt, wobei dann aus dem mindestens einen abgetrennten Elektrodenmaterial (1*) eine Elektrode (10) ausgebildet wird.

7. Verfahren nach einem der Ansprüche 1 bis 6, wobei das mindestens eine abgetrennte Elektrodenaktivmaterial (1*) mit mindestens einem Polymer (2,2') zu einer Mischung gemischt werden und aus der Mischung eine Elektrode ausgebildet wird, insbesondere wobei das mindestens eine Polymer (2,2'), mindestens ein ionenleitfähiges und/oder ionenleitendes, insbesondere lithiumionenleitfähiges und/oder lithiumionenleitendes, Polymer (2) und/oder mindestens ein nicht-ionenleitfähiges und/oder nicht-ionenleitendes, insbesondere nicht-lithiumionenleitfähiges und/oder nicht-lithiumionenleitendes, Polymer (2') umfasst oder ist, insbesondere wobei das mindestens eine Polymer (2,2') mindestens ein ionenleitfähiges und/oder ionenleitendes, insbesondere lithiumionenleitfähiges und/oder lithiumionenleitendes, Polymer (2) umfasst oder ist, wobei zusätzlich mindestens ein Leitsalz zu der Mischung gemischt wird.

8. Verfahren nach einem der Ansprüche 1 bis 7, wobei das mindestens eine abgetrennte Elektrodenaktivmaterial (1*) trocken mit dem mindestens einen Polymer (2,2') zu einer trockenen Mischung gemischt wird und/oder wobei aus der trockenen Mischung eine Elektrode (10), insbesondere in Form eines selbsttragenden Films und/oder einer Beschichtung, ausgebildet wird, insbesondere wobei aus der trockenen Mischung eine Elektrode (10) durch einen trockenen Herstellungsprozess, insbesondere durch einen trockenen Pressvorgang und/oder durch Trockenbeschichten, ausgebildet wird.

9. Verfahren nach Anspruch 8, wobei das trockene Mischen mindestens einen Mischprozess mit einer hohen Scherbelastung umfasst, in dem das mindestens eine Polymer, insbesondere das mindestens eine ionenleitfähiges und/oder ionenleitendes, beispielsweise lithiumionenleitfähiges und/oder lithiumionenleitendes, Polymer und/oder das mindestens eine nicht-ionenleitfähiges und/oder nicht-ionenleitendes, beispielsweise nicht-lithiumionenleitfähiges und/oder nicht-lithiumionenleitendes, Polymer, zumindest teilweise fibrilliert wird.

10. Verfahren nach einem der Ansprüche 1 bis 9, wobei das mindestens eine abgetrennte Elektrodenaktivmaterial (1*) mit dem mindestens einen Polymer (2,2') und mit mindestens einem organischen Lösungsmittel (200) zu einer Mischung, insbesondere in Form einer Paste oder einer Extrusionsmasse, gemischt und aus der Mischung die Elektrode durch einen nassen Herstellungsprozess, insbesondere durch Nassbeschichten, ausgebildet wird.

11. Verfahren nach einem der Ansprüche 1 bis 10, wobei die aus der Mischung ausgebildete Elektrode (10) mit mindestens einem Flüssigelektrolyten (3) getränkt wird, wobei Poren und/oder Zwischenräume in der Elektrode (10) mit dem mindestens einen Flüssigelektrolyten (3) gefüllt und insbesondere ein Polymer-Gel-Elektrolyt ausgebildet wird.

12. Verfahren nach einem der Ansprüche 1 bis 11, wobei beim Abtrennen des mindestens einen Elektrodenmaterials (1,1*) von dem mindestens einen organischen Elektrolytlösungsmittel und/oder der mindestens einen ionischen Flüssigkeit (2) Partikelgrößen des mindestens einen Elektrodenmaterials (1*), insbesondere durch Nasssieben, klassiert werden, wobei eine Größenfraktion des mindestens einen Elektrodenaktivmaterials (1*) abgetrennt und zur Herstellung der Elektrode (10) verwendet wird.

13. Verfahren nach einem der Ansprüche 1 bis 12, wobei das mindestens eine Elektrodenmaterial (1,1*) mindestens ein Elektrodenaktivmaterial umfasst oder ist, insbesondere wobei das mindestens eine Elektrodenmaterial (1,1*) mindestens ein Elektrodenaktivmaterial für eine positive Elektrode, insbesondere mindestens ein übergangsmetalloxid-basiertes Elektrodenaktivmaterial für eine positive Elektrode, und/oder mindestens ein Elektrodenaktivmaterial für eine negative Elektrode, insbesondere mindestens ein kohlenstoffbasiertes Elektrodenaktivmaterial für eine negative Elektrode, und/oder mindestens einen Elektrodenzusatzstoff, insbesondere mindestens ein elektrisches Leitmittel, umfasst oder ist.

14. Elektrode (10) für eine elektrochemische Zelle, insbesondere für eine Batteriezelle und/oder Brennstoffzelle und/oder Elektrolysezelle, hergestellt durch ein Verfahren nach einem der Ansprüche 1 bis 13.

15. Elektrochemische Zelle, insbesondere Batteriezelle und/oder Brennstoffzelle und/oder Elektrolysezelle, umfassend mindestens eine durch ein Verfahren nach einem der Ansprüche 1 bis 13 hergestellte Elektrode und/oder mindestens eine Elektrode nach Anspruch 14, insbesondere wobei die Zelle eine Polymerelektrolyt-Zelle ist.
